# FASCICULE DE BREVET EUROPEEN

(11) **EP 3 160 795 B1**
(45) Date de publication et mention de la délivrance du brevet: **25.12.2019**
(21) Numéro de dépôt: 15731349.5
(22) Date de dépôt: 25.06.2015
(51) Int. Cl.: B60N 3/00, B64D 11/06

(54) **SYSTEME ELASTIQUE DE BLOQUAGE D'UNE TABLETTE DE SIEGE DE VEHICULE, EN PARTICULIER D'AERONEF**
ELASTISCHES SYSTEM ZUR IMMOBILISIERUNG EINER SITZSCHALE EINES FAHRZEUGS, INSBESONDERE EINES FLUGZEUGS
ELASTIC SYSTEM FOR IMMOBILIZING A SEAT TRAY OF A VEHICLE, IN PARTICULAR OF AN AIRCRAFT

(30) Priorité: 27.06.2014 FR 1456046
(43) Date de publication de la demande: 03.05.2017
(73) Titulaire: Expliseat, 75006 Paris (FR)
(72) Inventeur: TEJEDOR, Vincent, 92130 Issy Les Moulineaux (FR); SAADA, Benjamin, Jacob, 75001 Paris (FR); DUVAL, Gilles, 92300 Levallois Perret (FR); GOSET, Stéphane, 95880 Enghien-les-bains (FR); SAMUELIAN, Jean-Charles, 75010 Paris (FR)
(74) Mandataire: Brevalex
(86) Numéro de dépôt international: PCT/EP2015/064396
(87) Numéro de publication internationale: WO 2015/197768

(56) Documents cités:
- EP-A2- 1 366 951
- WO-A1-2012/011347
- FR-A1- 2 866 611
- GB-A- 825 037
- GB-A- 990 581
- US-A1- 2009 200 840

## Description

### Domaine technique

La présente invention s'applique au domaine des transports de passagers, entre autres, collectifs, notamment par la route, le rail, ou l'air. Elle concerne plus particulièrement le domaine des sièges de passagers, et notamment les éléments rabattables équipant de tels sièges, sur l'arrière des dossiers, tels qu'une tablette pivotante rabattable.

L'invention se rapporte ainsi à un dispositif de blocage élastique, en position relevée, d'un élément rabattable contre un dossier de siège de véhicule, et un siège de véhicule pour un passager comportant un tel dispositif de blocage élastique.

### Art antérieur et problème posé

Dans le domaine des transports de passagers, les sièges des véhicules de transport sont le plus souvent, et de plus en plus équipés d'éléments rabattables, notamment de tablettes, que les passagers assis sur les sièges se trouvant derrière le siège portant la tablette, peuvent déployer ou rabattre, en fonction de leurs besoins. En particulier, de telles tablettes peuvent être utilisées par les passagers pour se restaurer, pour travailler, ou bien encore se divertir. Elles servent de support pour poser tout type d'objet dont les passagers se servent pendant leur voyage.

Dans le cadre de la conception des éléments rabattables équipant les sièges pour passagers, et en particulier dans le cas des tablettes pivotantes, des normes de sécurité imposent généralement de prévoir un mécanisme de blocage des tablettes en position relevée. Par « position relevée », on entend, dans la présente description de demande de brevet, une position de non utilisation de l'élément rabattable. Dans cette position, la tablette est contre la face arrière du dossier du siège pour passager. Ce blocage en position relevée des tablettes est généralement fortement souhaitable pour assurer le confort et la sécurité des passagers pendant leur voyage.

On connaît donc des mécanismes de blocage de tablette en position relevée contre la face arrière du dossier du siège pour passager.

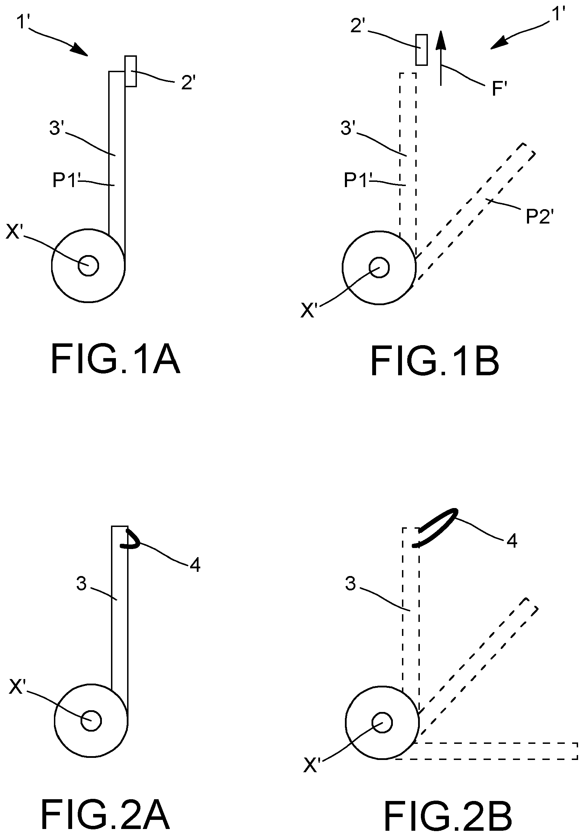

A titre d'exemple, et en référence aux figures 1A et 1B, on montre un exemple de mécanisme de blocage 1', par utilisation d'un loquet déplaçable 2'.

Sur la figure 1A, une tablette 3' est montée en rotation autour d'un axe de rotation X', solidaire du siège. La tablette 3' est dans une position relevée P1', plus précisément une position verticale P1', plaquée contre la face arrière du dossier du siège. Le blocage 1' de la tablette 3', en position relevée P1', est assurée par la présence du loquet déplaçable 2', situé généralement au niveau de la partie haute de la tablette 3', qui est reliée à une partie fixe du siège. La position du loquet déplaçable 2', contre la face externe de la tablette 3', qui est orientée en direction opposée du siège, bloque la course de la tablette 3' vers toute autre position que la position verticale P1', et notamment vers la position horizontale d'utilisation.

En référence à la figure 1B, le passager peut déplacer le loquet déplaçable 2' vers le haut, selon la flèche F', de façon à libérer la tablette 3'. Dans ce cas, le mécanisme de blocage 1' cesse de maintenir la tablette 3' en position relevée P1' et autorise le déplacement de la tablette 3' vers une autre position P2', par rotation autour de l'axe de rotation X'.

Une solution par blocage intégré à l'axe de rotation de la tablette a également été développée. Cette solution est performante, mais peut se révéler complexe à mettre en œuvre, le mécanisme étant intégré dans une pièce que l'on souhaite peu encombrante pour des raisons ergonomiques.

Le but de l'invention est de remédier à cet inconvénient et à fournir un système robuste et léger, respectant les normes en vigueur.

L'objectif des objets de l'invention est également de diminuer le poids et l'encombrement des pièces permettant le blocage de la tablette pivotante en position haute, d'assurer la sécurité du passager en cas de crash dans le cas d'un aéronef, ou d'accident frontal, dans le cas de véhicules routiers ou ferroviaires et de permettre une personnalisation rapide de l'aspect du système de blocage par une fonction d'interchangeabilité rapide.

D'autre part, dans le document de brevet GB 990 581, on décrit une tablette équipant l'arrière d'un siège de véhicule. On y montre deux sangles 21 qui servent à maintenir la tablette ou un plateau dans sa position verticale, c'est-à-dire rabattue contre le siège.

### Objets de l'invention

Un premier objet principal de l'invention est un dispositif de blocage d'une tablette pivotante de siège, placée à l'arrière du dossier du siège et destinée à servir pour une personne placée derrière le siège sur lequel se trouve la tablette.

Le dossier de siège selon l'invention comprend les caractéristiques de la revendication 1.

Dans une première réalisation envisagée de l'invention, le dispositif comprend au moins une sangle élastique fixée à l'arrière du dossier pour maintenir la tablette contre le dossier.

Cette sangle peut être une lanière tissée avec un seul fil constitué de deux sortes de fibres différentes ayant des résistances à l'étirement différentes, la ou les fibre(s) de plus grande résistance à l'étirement entourant la ou les fibre(s) de plus faible résistance à l'étirement.

Une autre réalisation consiste à ce que la sangle soit tissée avec deux fils de résistances à l'étirement différentes.

Une autre variante consiste en ce que la sangle ait deux parties montées en parallèle, une partie de faible résistance à l'étirement et une partie de plus grande résistance à l'étirement.

Une autre variante consiste à utiliser un élément rigide placé sur une partie de faible résistance à l'étirement de la sangle et une butée placée sur un élément fixe autre que la sangle et ayant une plus grande résistance à l'étirement.

Cet élément de plus grande résistance à l'étirement est constitué, de préférence, par la housse du siège.

Une autre variante consiste à utiliser une deuxième sangle arrière placée entre la tablette en position relevée et le dossier et possédant une grande résistance à l'étirement pour empêcher le basculement de la tablette contre le dossier du siège en cas de forte pression accidentelle sur la face arrière de la tablette, quand cette dernière est en position relevée.

Une autre variante consiste en ce que la sangle ait deux parties élastiques à double résistance à l'étirement, placées aux extrémités de la sangle et incorporées au dossier, le reste de la sangle étant une partie externe au dossier, visible pour le passager se trouvant derrière le dossier sur lequel la tablette est montée, cette partie externe étant destinée à être personnalisée.

Dans ce cas, la réalisation de chaque partie à double résistance à l'étirement peut comporter un ressort à grande résistance à l'étirement détendu et la sangle élastique elle-même se trouvant en partie à l'intérieur du dossier.

La sangle élastique peut constituer un support d'éléments visuels interchangeables.

Elle peut également servir pour accrocher des accessoires divers.

Elle peut également comporter des interfaces électriques et/ou de communication, le câblage de ces interfaces étant intégré à la sangle.

Un deuxième objet principal de l'invention est un siège de véhicule dont le dossier est équipé d'un dispositif de blocage élastique susmentionné.

### Liste des figures

L'invention et ses différentes caractéristiques techniques seront mieux comprises à la lecture de la description suivante, accompagnée de plusieurs figures représentant respectivement :
- figures 1A et 1B, deux schémas relatifs à un dispositif de blocage selon l'art antérieur;
- figures 2A et 2B, deux schémas relatifs au dispositif selon l'invention ;
- figures 3, un schéma relatif à l'implantation du dispositif selon l'invention, sur une structure de siège de véhicule ;
- figure 4, un graphe relatif au fonctionnement du dispositif de blocage selon l'invention ;
- figures 5A, 5B, des schémas relatifs au fonctionnement de la sangle selon l'invention, dans une première réalisation ;
- figures 6A et 6B, une deuxième réalisation du dispositif de blocage, avec sangle selon l'invention ;
- figures 7A, 7B, deux schémas relatifs à la constitution des fibres ou des fils utilisés dans le tissage de la sangle du dispositif selon l'invention ;
- figure 8, un schéma relatif à la fabrication d'un tel fil ou d'une telle fibre, utilisé dans la sangle du dispositif selon l'invention ;
- figure 9, un schéma relatif à une variante additionnelle au dispositif selon l'invention ;
- figures 10A et 10B, deux schémas relatifs à une variante additionnelle au dispositif selon l'invention ;
- figure 11, un schéma relatif à l'implantation d'une variante de réalisation dans un dossier de siège de véhicule ;
- figure 12, une figure relative à l'implantation d'une variante de l'invention sur un dossier de siège de véhicule ; et
- figure 13, une figure d'une autre implantation du dispositif selon l'invention, implanté sur un dossier de siège de véhicule.

### Description détaillée de plusieurs réalisations de l'invention

En référence aux figures 2A et 2B, le principe du dispositif de blocage élastique consiste à utiliser une sangle, textile, ou plastique, qui soit déformable, et au moins partiellement, pour bloquer la rotation de la tablette pivotante dans sa partie haute et dans au moins une direction. La tablette 3 est montée sur un axe de rotation X, sensiblement horizontal et fixe par rapport au dossier du siège, à l'arrière de ce dernier. Une sangle 4 élastique permet de retenir la tablette 3, quand elle est en position sensiblement verticale. La sangle élastique 4 est fixée au dossier et agit sur la partie distale de la tablette 3. La figure 2B montre la tablette 3 dans trois positions, une position verticale, une position intermédiaire et une position horizontale.

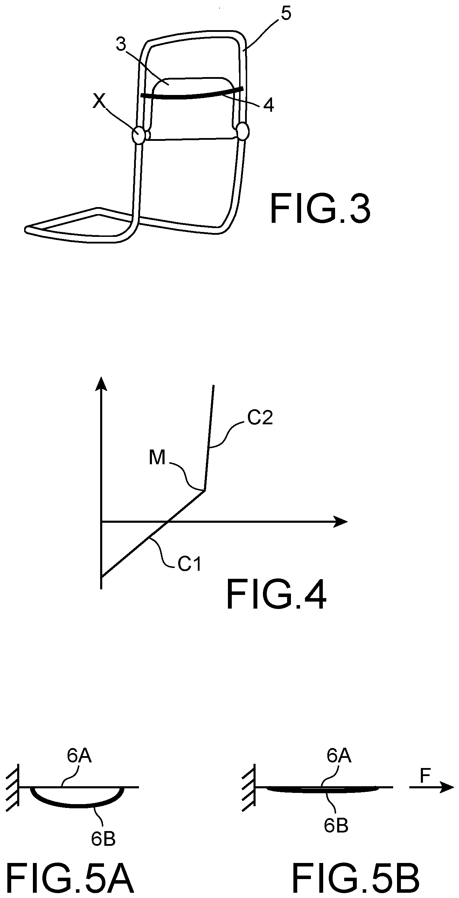

En référence à la figure 3, la sangle élastique 4 est montée sur la structure 5 du dossier du siège sur laquelle la tablette 3 est montée pivotante, autour de son axe de rotation X fixe, par rapport à la structure du dossier du siège.

Ainsi la sangle élastique 4 maintient la tablette 3 en position relevée, en exerçant sur celle-ci une force opposée à la direction de déploiement de la tablette vers l'arrière par rapport au dossier du siège. La sangle élastique 4 doit être relevable facilement par l'utilisateur, afin de libérer la tablette 3 et de permettre son déploiement vers une position horizontale d'utilisation pour un passager assis sur un siège placé juste derrière le siège dont le dossier porte la tablette considérée. Toutefois, la sangle élastique 4 doit être suffisamment résistante pour pouvoir résister à une traction abusive en extension.

Pour ce faire, la sangle élastique 4 a une résistance à l'étirement à deux paliers, ou à deux valeurs, à savoir une faible résistance à l'étirement pour des élongations limitées, afin de pouvoir être déformée aisément, lors du fonctionnement normal de la tablette, et une résistance à l'étirement plus importante pour pouvoir résister à une utilisation abusive de la sangle élastique 4.

En référence à la figure 4 qui est un graphe illustrant les deux résistances à l'étirement différentes d'une sangle élastique utilisée dans le dispositif selon l'invention, la force exercée par l'utilisateur sur la sangle est symbolisée par la flèche verticale des ordonnées, tandis que la position de la sangle est représentée en abscisse. Cette disposition est donc prévue pour pouvoir combiner une résistance à l'étirement accrue aux efforts abusifs et une utilisation aisée de la sangle dans des conditions normales.

La courbe constituée des deux parties C1 et C2 de ce graphe montre, par la première partie C1 que l'élongation de la sangle élastique est facile, lorsque la force exercée sur cette sangle élastique est faible. Comme le montre la deuxième partie C2, à un certain moment M, la résistance à l'étirement de la sangle élastique augmente et l'élongation de cette dernière augmente beaucoup moins, alors que l'effort exercé sur celle-ci continue à augmenter dans la même proportion.

La variation de résistance à l'étirement du dispositif peut être obtenue de plusieurs façons.

En premier lieu, deux éléments de ressorts peuvent être montés en parallèle, l'un avec une faible résistance à l'étirement, utilisable aux faibles extensions, et un deuxième de résistance à l'étirement importante pour des extensions plus importantes, voire accidentelles. Il est donc proposé d'utiliser un composant textile pouvant combiner des fibres d'élasticité différentes, pour reproduire au niveau du textile la combinaison des deux ressorts.

Les figures 5A et 5B montrent l'exemple d'une combinaison entre une partie souple à l'étirement 6A et une partie plus raide à l'étirement 6B. Du fait de la partie plus raide à l'étirement 6B est montée de manière à être beaucoup plus lâche et détendue lorsque la partie souple à l'étirement 6A est en position détendue, la partie plus raide à l'étirement 6B n'est pas sollicitée pour le début du mouvement, à savoir pour de faibles extensions. En référence à la figure 5B, lorsque la partie souple à l'étirement 6A s'est allongée, la partie plus raide 6B s'est tendue et rentre en action au niveau de plus grandes élongations. La continuation de l'extension de la sangle élastique devient beaucoup plus difficile pour l'utilisateur.

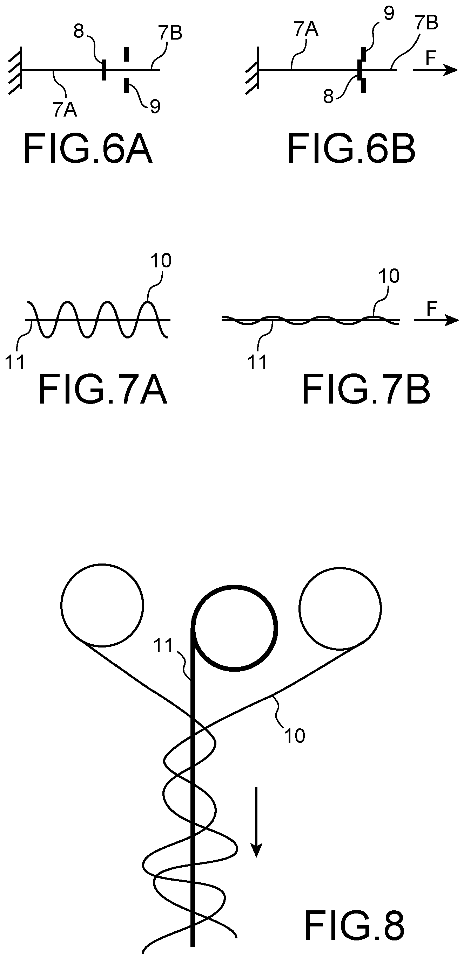

Les figures 6A et 6B montrent une deuxième variante pour réaliser un système élastique à deux résistances à l'étirement différentes. La sangle est ici constituée d'une partie souple à l'étirement 7A et d'une partie raide à l'étirement 7B. C'est deux parties sont montées en séries. Entre les deux se trouvent un élément rigide 8 solidaire de la sangle élastique, à la jonction de ces deux parties souples 7A et raides 7B. Une butée fixe, montée sur le dossier du siège, est placée autour, ou à côté, de la sangle élastique, de manière à pouvoir provoquer l'arrêt de l'élément rigide 8, lors de l'extension de la partie souple 7A de la sangle. Comme le montre la figure 6B, l'extension de la partie souple 7A n'est alors plus possible, quand l'élément rigide 8 est en butée contre la butée fixe 9. La partie raide 7B peut alors rentrer en action et opposer une résistance à l'étirement plus importante à l'utilisateur.

En référence aux figures 7A et 7B, une autre variante intéressante consiste à combiner des fibres de résistances à l'étirement différentes, au sein d'un même fil. Ainsi, une fibre de plus grande résistance à l'étirement 10 entoure de manière plutôt détendue ou lâche une fibre de plus faible résistance à l'étirement 11, qui elle est tendue. En fait, la fibre de plus faible résistance à l'étirement 11 constitue une âme autour de laquelle est entortillée la fibre de plus grande résistance à l'étirement 10. A la figure 7A, l'ensemble est complètement détendu, c'est-à-dire que la sangle est dans sa forme la plus souvent utilisée, c'est-à-dire celle dans laquelle elle maintient la tablette contre le dossier car la sangle n'est pas sollicitée. Au contraire, comme le montre la figure 7B, une force F étant exercée sur la combinaison de l'ensemble des deux fibres de plus grande résistance à l'étirement 10 et de plus faible résistance à l'étirement 11, cette dernière étant plus tendue que la fibre de plus grande résistance à l'étirement 10 s'allonge, tandis que la fibre de plus grande résistance à l'étirement 10 voit sa spirale collée à la fibre de plus faible résistance à l'étirement 11. La fibre de plus grande résistance à l'étirement 10 rentre alors en action en opposant une résistance à l'étirement plus importante à l'utilisateur.

Il est également possible, dans le cadre de cette idée, représentée par les figures 7A et 7B, de combiner des fils de résistances à l'étirement différentes, au sein d'un même textile. Ceci revient à tisser une sangle avec deux fils de résistances à l'étirement différentes. A l'état relâché les fils souples sont relativement tendus et peuvent s'allonger jusqu'à ce que les fils raides soient tendus et commencent à exercer une résistance à l'étirement plus importante. Ainsi, à faible extension, la résistance à l'étirement est celle des fils ou des fibres souples, tandis que lors d'une extension plus élevée, la résistance à l'étirement est celle des fils, ou des fibres raides.

En référence à la figure 8, le fil, constitué par deux fibres différentes, peut être réalisé en utilisant un procédé de guipage. Il consiste à enrober un ou plusieurs fils âme de résistance à l'étirement faible 11, par exemple à base de polyuréthane thermoplastique, avec un ou plusieurs fils de couverture plus importante de résistance à l'étirement 10, c'est-à-dire très résistant, par exemple à base de polyester. Les deux matériaux choisis peuvent être résistants au feu et respecter les contraintes réglementaires, en vue de leur installation à bord d'une cabine d'aéronef. A titre d'exemple, on peut nommer les produits TreviraCS® pour le polyester et l'Ellastolan® pour le polyuréthane thermoplastique.

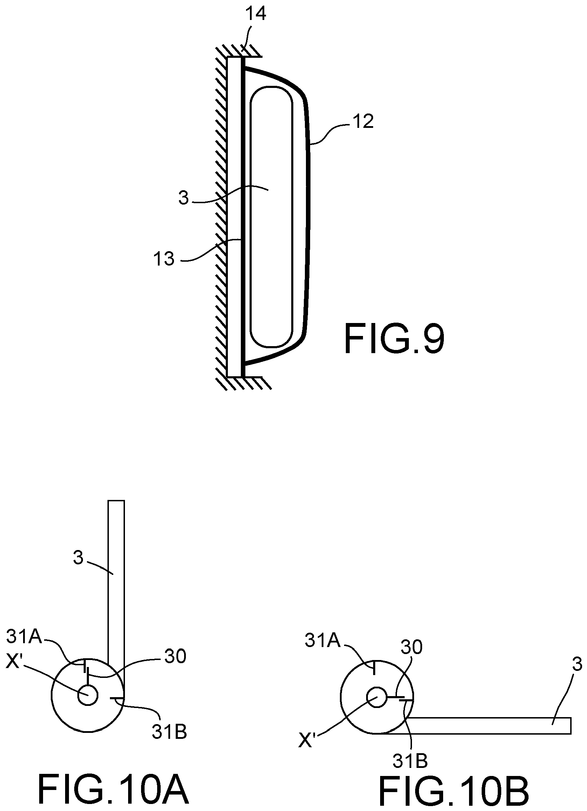

En référence à la figure 9, la sangle élastique 12, maintenant la tablette 3 contre le dossier fixe du siège, peut être complétée par une sangle arrière 13, qui se trouve entre la tablette 3 et le siège 14, lorsque la tablette 3 est en position repliée, c'est-à-dire verticale. Cette sangle arrière 13 a pour fonction d'empêcher la tablette 3 de pénétrer dans le dossier 14, si une force excessive était exercée, en position relevée de la tablette, dans la direction opposée à la direction de déploiement de la tablette 3. Ceci est notamment le cas en cas d'accident, de crash, ou de choc frontal du véhicule.

En référence aux figures 10A et 10B, on signale qu'une deuxième solution, permettant d'éviter que la tablette 3 ne pénètre dans le dossier 14 est de déporter ce système empêchant la rotation de la tablette 3 au niveau de l'axe de rotation X de la tablette 3. En effet, en utilisant un élément mobile en rotation 30 solidaire de la tablette 3, au niveau de l'axe X et deux butées angulaires fixes 31A et 31B, il est possible de limiter le débattement angulaire de la tablette 3 autour de son axe X, sans avoir recours à une sangle supplémentaire.

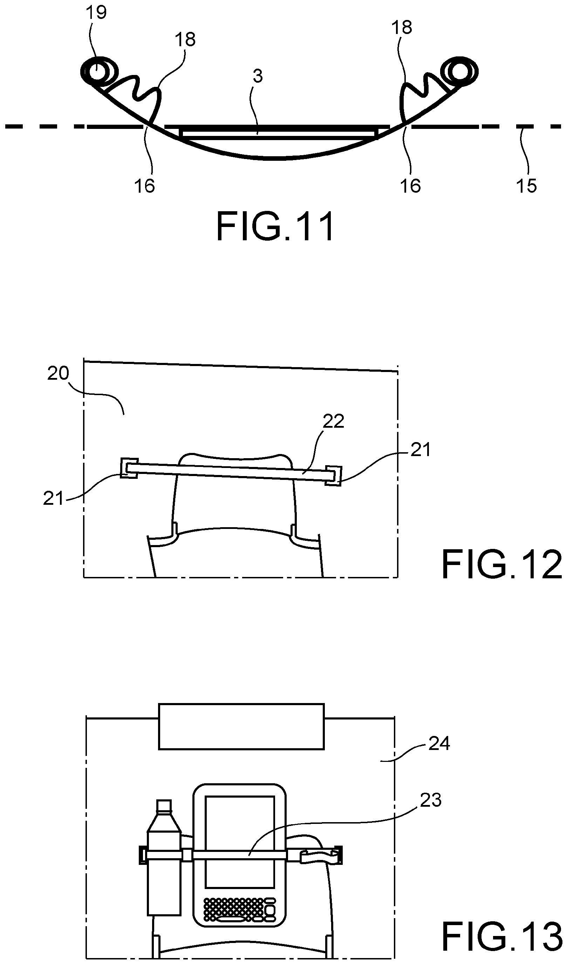

En référence à la figure 11, une variante de réalisation particulièrement intéressante est représentée dans son intégration au dossier. Cette figure 11 est un schéma partiel en coupe du dossier du siège.

On y a fait figurer une sangle élastique 17 maintenant une tablette 3 contre un dossier représenté, entre autres, par sa housse 15, à savoir la partie arrière de la housse du dossier du siège. La sangle élastique est fixée à une structure rigide 19 en tubes composites du siège et placé à l'intérieur du dossier, à ce niveau. Ainsi, à l'état relâché, des éléments de grande résistance à l'étirement 18, qui sont placés en parallèle de la sangle élastique 17, sont détendus. La sangle élastique 17 est à l'intérieur du dossier et de la housse 15, et sort par des ouvertures 16 dans la housse 15. Ainsi, lorsque l'utilisateur tire la sangle élastique 17, pour libérer la tablette, la sangle se tend, de même que les éléments de grande résistance à l'étirement 18, qui deviennent alors fonctionnels et opposent une résistance beaucoup plus importante à l'utilisateur sur l'élongation de la sangle élastique 17.

En référence à la figure 12, une mise en œuvre concrète de la variante, représentée par les figures 6A et 6B, consiste à utiliser la housse 20 du dossier pour y fixer la butée fixe, repérée 9 sur les figures 6A et 6B. Ainsi, l'élément rigide, non visible sur cette figure 11, car se trouvant derrière la housse 20, vient en butée contre une partie rigide de la housse, située au niveau des ouvertures 21, par exemple une pièce de métal. Ainsi, lors d'une élongation de la sangle 22, cette dernière coulisse dans les ouvertures 21 de la housse 20 et vient en butée au niveau des ouvertures 21, grâce à des pièces métalliques.

Enfin, en référence à la figure 13, la partie visible 23 de la sangle, qui dépasse derrière le dossier 24 peut être équipée d'éléments d'accrochage ou de supports, par exemple pour supporter un jeu vidéo, un livre, ou simplement une bouteille d'eau. Ainsi, la partie visible 23 de cette sangle peut être personnalisée, en fonction des besoins et du cahier des charges du client.

On peut compléter une telle partie visible de la sangle en équipant celle-ci d'un câble électrique, et en complétant la sangle d'une protection de textile. Ceci permet d'utiliser une interface utilisant des éléments, ou appareils électroniques, tels qu'une tablette. La sangle peut alors avoir la fonction de station d'accueil pour une tablette tactile, avec connexion réseau et prise de chargement, et en utilisant des interfaces jouxtant la tablette. Le câblage de ces interfaces est alors intégré dans la sangle. Ainsi, différents appareils périphériques du passager, se trouvant sur le siège, placé derrière la tablette en question, peuvent être alimentés électriquement aux circuits du véhicule et recevoir des informations de télécommunication.

Le dispositif selon l'invention s'applique en premier lieu aux aéronefs et en particulier aux sièges des passagers.

## Revendications

1. Dossier de siège équipé d'un dispositif de blocage d'une tablette (3) placée de façon pivotante sur la face arrière du dossier de siège, la tablette (3) étant destinée à servir pour une personne assise sur un siège placé derrière le siège, sur lequel se trouve la tablette (3), le dispositif étant élastique pour permettre d'empêcher le déploiement de la tablette (3),
**caractérisé en ce que** le dispositif de blocage possède une résistance à l'étirement dont la capacité augmente, au-delà d'une certaine élongation déterminée du dispositif.

2. Dossier selon la revendication 1, **caractérisé en ce que** le dispositif de blocage de la tablette (3) est constitué d'une sangle élastique (4, 17, 23) fixée à l'arrière du dossier du siège, pour maintenir la tablette (3) contre le dossier du siège.

3. Dossier selon la revendication 2, **caractérisé en ce que** la sangle élastique (4, 17, 23) est tissée avec un seul fil constitué lui-même de fibres de deux types différents (10, 11) ayant des résistances à l'étirement différentes, la ou les fibre(s) de plus grande résistance à l'étirement (10) entourant la ou les fibres de plus faible résistance à l'étirement (11).

4. Dossier selon la revendication 2, **caractérisé en ce que** la sangle élastique (4, 17, 23) est tissée avec deux fils (10, 11) de résistances à l'étirement différentes, le fil de plus grande résistance à l'étirement (10) entourant le fil de plus faible résistance à l'étirement (11).

5. Dossier selon la revendication 2, **caractérisé en ce que** la sangle élastique (4, 23) est constituée de deux parties montées en parallèle, une partie de faible résistance à l'étirement (6A) et une partie de grande résistance à l'étirement (6B), la partie de grande résistance à l'étirement (6B) étant, dans la position relâchée de l'ensemble de la sangle élastique (4, 23) beaucoup plus détendue que la partie de faible résistance à l'étirement (6A).

6. Dossier selon la revendication 2, **caractérisé en ce que** le dispositif de blocage de la tablette (3) utilise un élément rigide (8) placé sur une partie de faible résistance à l'étirement (7A) de la sangle élastique et une butée (9) placée sur un élément fixe, autre que la sangle élastique (4, 23) et de plus grande résistance à l'étirement.

7. Dossier selon la revendication 6, **caractérisé en ce que** la partie de grande résistance à l'étirement est constituée par une housse (20) du dossier du siège.

8. Dossier selon la revendication 2, **caractérisé en ce qu'**il comprend une sangle arrière (13), placée entre la tablette (3) et le dossier (14), dans une position repliée de la tablette (3), et possédant une grande résistance à l'étirement, en vue d'empêcher le basculement de la tablette (3) contre le dossier (14), quand la tablette (3) est en position relevée.

9. Dossier selon la revendication 2, **caractérisé en ce que** la sangle (17) possède deux parties élastiques d'extrémité à double résistance à l'étirement, incorporées au dossier, et une partie visible, à l'extérieur du dossier, utilisable pour le passager se trouvant sur le siège, placé derrière le siège sur laquelle sont fixées la tablette (3) et la sangle élastique (17).

10. Dossier selon la revendication 9, **caractérisé en ce que** les deux parties d'extrémité à double résistance à l'étirement sont constituées d'un ressort à grande résistance à l'étirement (18), détendu dans la position détendue de la sangle élastique (17) et par la sangle élastique (17) elle-même qui se trouve en partie à l'intérieur du dossier.

11. Dossier selon la revendication 2, **caractérisé en ce que** la sangle élastique (4, 17, 23) comporte des supports d'éléments visuels interchangeables.

12. Dossier selon la revendication 2, **caractérisé en ce que** la sangle élastique (4, 17, 23) comporte des éléments d'accrochage d'accessoires.

13. Dossier selon la revendication 2, **caractérisé en ce que** la sangle élastique (4, 17, 23) comporte des interfaces électriques et/ou de communication, le câblage de ces interfaces étant intégrés à la sangle élastique (4, 17, 23).

14. Siège de véhicule équipé d'un dossier selon l'une des revendications précédentes.

## Patentansprüche

1. Sitzrückenlehne mit einer Arretierungsvorrichtung für einen Tisch (3), der schwenkbar an der Rückseite der Rückenlehne des Sitzes angeordnet ist, wobei der Tisch (3) dazu bestimmt ist, einer Person zu dienen, die auf einem Sitz sitzt, der hinter dem Sitz angeordnet ist, an dem sich der Tisch (3) befindet, wobei die Arretierungsvorrichtung elastisch ist, um es zu ermöglichen, das Ausklappen des Tisches (3) zu verhindern,
**dadurch gekennzeichnet, dass** die Arretierungsvorrichtung des Tisches (3) eine Streckfestigkeit besitzt, deren Kapazität über eine bestimmte Dehnung hinaus zunimmt.

2. Rückenlehne nach Anspruch 1, **dadurch gekennzeichnet, dass** die Arretierungsvorrichtung des Tisches (3) aus einem elastischen Band (4, 17, 23) besteht, das an der Rückseite der Rückenlehne des Sitzes befestigt ist, um den Tisch (3) an der Rückenlehne des Sitzes zu halten.

3. Rückenlehne nach Anspruch 2, **dadurch gekennzeichnet, dass** das elastische Band (4, 17, 23) mit einem einzigen Garn gewebt ist, das wiederum aus Fasern zweier unterschiedlicher Typen (10, 11) mit unterschiedlichen Streckfestigkeiten besteht, wobei die Faser oder die Fasern mit der höheren Streckfestigkeit (10) die Faser oder die Fasern mit der geringeren Streckfestigkeit (11) umgibt bzw. umgeben.

4. Rückenlehne nach Anspruch 2, **dadurch gekennzeichnet, dass** das elastische Band (4, 17, 23) mit zwei Garnen (10, 11) mit unterschiedlichen Streckfestigkeiten gewebt ist, wobei das Garn mit der höheren Streckfestigkeit (10) das Garn mit der geringeren Streckfestigkeit (11) umgibt.

5. Rückenlehne nach Anspruch 2, **dadurch gekennzeichnet, dass** das elastische Band (4, 23) aus zwei parallel montierten Teilen besteht, einem Teil mit geringer Streckfestigkeit (6A) und einem Teil mit hoher Streckfestigkeit (6B), wobei der Teil mit hoher Streckfestigkeit (6B) in der entspannten Position des gesamten elastischen Bandes (4, 23) wesentlich schlaffer ist als der Teil mit geringer Streckfestigkeit (6A) .

6. Rückenlehne nach Anspruch 2, **dadurch gekennzeichnet, dass** die Arretierungsvorrichtung des Tisches (3) ein starres Element (8) verwendet, das an einem Teil mit geringer Streckfestigkeit (7A) des elastischen Bandes angeordnet ist, und einen Anschlag (9), der an einem ortsfesten Element angeordnet ist, das nicht das elastische Band (4, 23) ist und eine höhere Streckfestigkeit hat.

7. Rückenlehne nach Anspruch 6, **dadurch gekennzeichnet, dass** der Teil mit hoher Streckfestigkeit aus einem Überzug (20) der Rückenlehne des Sitzes besteht.

8. Rückenlehne nach Anspruch 2, **dadurch gekennzeichnet, dass** sie ein rückwärtiges Band (13) umfasst, das in einer eingeklappten Position des Tisches (3) zwischen dem Tisch (3) und der Rückenlehne (14) angeordnet ist und eine hohe Streckfestigkeit besitzt, um das Kippen des Tisches (3) gegen die Rückenlehne (14) zu verhindern, wenn der Tisch (3) in der hochgeschwenkten Position ist.

9. Rückenlehne nach Anspruch 2, **dadurch gekennzeichnet, dass** das Band (17) zwei elastische Endteile mit doppelter Streckfestigkeit besitzt, die in die Rückenlehne eingearbeitet sind, und ein sichtbares Teil außerhalb der Rückenlehne, das von dem Passagier benutzbar ist, der sich auf dem Sitz befindet, der hinter dem Sitz angeordnet ist, an dem der Tisch (3) und das elastische Band (17) befestigt sind.

10. Rückenlehne nach Anspruch 9, **dadurch gekennzeichnet, dass** die beiden Endteile mit doppelter Streckfestigkeit aus einer Feder mit hoher Streckfestigkeit (18) bestehen, die in der entspannten Position des elastischen Bandes (17) entspannt ist, und aus dem elastischen Band (17) selbst, das sich teilweise im Innern der Rückenlehne befindet.

11. Rückenlehne nach Anspruch 2, **dadurch gekennzeichnet, dass** das elastische Band (4, 17, 23) Halterungen für austauschbare visuelle Elemente umfasst.

12. Rückenlehne nach Anspruch 2, **dadurch gekennzeichnet, dass** das elastische Band (4, 17, 23) Elemente zum Festmachen von Zubehör umfasst.

13. Rückenlehne nach Anspruch 2, **dadurch gekennzeichnet, dass** das elastische Band (4, 17, 23) elektrische und/oder Kommunikationsschnittstellen umfasst, wobei die Verkabelung dieser Schnittstellen in das elastische Band (4, 17, 23) integriert ist.

14. Fahrzeugsitz mit einer Rückenlehne nach einem der vorhergehenden Ansprüche.

## Claims

1. Seat back of a seat provided with an immobilization device for a tray (3) placed free to pivot on the back face of a seat back, the tray (3) being designed for use by a person sitting on a seat behind the seat on which the tray (3) is fitted, the immobilizing device being elastic to prevent extension of the tray (3),
**characterised in that** the immobilization device of the tray (3) has a resistance to stretching of which the capacity increases beyond a certain determined elongation of the device.

2. Seat back according to claim 1, **characterised in that** it is composed of an elastic strap (4, 17, 23) fixed behind the seat back to hold the tray (3) in contact with the seat back.

3. Seat back according to claim 2, **characterised in that** the elastic strap (4, 17, 23) is woven from a single thread itself composed of two different types of fibres (10, 11) with different resistances to stretching, the fibre (10) that has higher resistance to stretching surrounding the fibre (11) that has lower resistance to stretching.

4. Seat back according to claim 2, **characterised in that** the elastic strap (4, 17, 23) is woven from two threads with different resistances to stretching, the thread that has higher resistance to stretching surrounding the fibre (11) that has lower resistance to stretching.

5. Seat back according to claim 2, **characterised in that** the elastic strap (4, 23) is composed of two parts installed in parallel, a part that has low resistance to stretching (6A) and a part that has high resistance to stretching (6B), the part that has high resistance to stretching (6B) being much more relaxed than the part that has low resistance to stretching (6A), when the elastic strap (4, 23) in the relaxed position.

6. Seat back according to claim 2, **characterised in that** the immobilization device for the tray (3) uses a rigid element (8) placed on a part of the elastic strap that has low resistance to stretching (7A) and a stop (9) placed on a fixed element other than the elastic strap (4, 23) and that has higher resistance to stretching.

7. Seat back according to claim 6, **characterised in that** the part that has high resistance to stretching is composed of a cover (20) on the seat back.

8. Seat back according to claim 2, **characterised in that** it comprises a rear strap (13) placed between the tray (3) and the seat back (14), in a folded position of the tray (3), and with a high resistance to stretching, in order to prevent the tray (3) from tilting in contact with the seat back (14) when the tray (3) is in the stored position.

9. Seat back according to claim 2, **characterised in that** the strap (17) has two elastic end parts with double resistance to stretching built into the seat back, and a visible part on the outside of the seat back that can be used for the passenger on the seat behind the seat to which the tray (3) and the elastic strap (17) are fixed.

10. Seat back according to claim 9, **characterised in that** the two end parts with double resistance to stretching are composed of a spring (18) that has high resistance to stretching, relaxed in the relaxed position of the elastic strap (17) and by the elastic strap (17) itself located partly inside the seat back.

11. Seat back according to claim 2, **characterised in that** the elastic strap (4, 17, 23) comprises supports for interchangeable visual elements.

12. Seat back according to claim 2, **characterised in that** the elastic strap (4, 17, 23) comprises accessory attachment elements.

13. Seat back according to claim 2, **characterised in that** the elastic strap (4, 17, 23) comprises electrical and/or communication interfaces, the wiring of these interfaces being integrated into the elastic strap (4, 17, 23).

14. Vehicle seat equipped with a seat back according one of the preceding claims.
